# FASCICULE DE BREVET EUROPEEN

(11) **EP 4 382 729 B1**
(45) Date de publication et mention de la délivrance du brevet: **29.01.2025**
(21) Numéro de dépôt: 23201774.9
(22) Date de dépôt: 05.10.2023
(51) Int. Cl.: F01N 1/14

(54) **AERONEF MUNI D'UN MOTEUR ET D'UN CONDUIT D'ECHAPPEMENT AUTOUR D'UNE TUYERE D'EJECTION DU MOTEUR**
LUFTFAHRZEUG, DAS MIT EINEM MOTOR UND EINEM AUSLASSKANAL UM EINE MOTORSTRAHLDÜSE AUSGESTATTET IST
AIRCRAFT PROVIDED WITH AN ENGINE AND AN EXHAUST DUCT AROUND AN ENGINE EJECTION NOZZLE

(30) Priorité: 09.12.2022 FR 2213058
(43) Date de publication de la demande: 12.06.2024
(73) Titulaire: Airbus Helicopters, 13725 Marignane Cedex (FR)
(72) Inventeur: LEGRAS, Guillaume, 13880 VELAUX (FR); PINTO, Philippe, 13250 SAINT-CHAMAS (FR); ALBERTINI, Christophe, 13240 SEPTEMES LES VALLONS (FR)
(74) Mandataire: GPI Brevets

(56) Documents cités:
- EP-B1- 3 381 792
- CA-A1- 2 860 080

## Description

La présente invention concerne un aéronef muni d'un moteur et d'un conduit d'échappement autour d'une tuyère d'éjection du moteur.

Un aéronef, et par exemple un giravion, peut comprendre un moteur qui expulse des gaz de combustion par une tuyère d'éjection.

Le moteur est usuellement logé dans un compartiment de l'aéronef dénommé « compartiment moteur ». Le compartiment moteur peut être délimité par une ou des cloisons pare-feu et/ou au moins un capotage.

L'aéronef peut alors comprendre un conduit d'échappement à sections circulaires qui est ouvert sur le compartiment moteur et sur un milieu extérieur à l'aéronef. Ce conduit d'échappement entoure localement la tuyère d'éjection. Ce conduit d'échappement peut permettre de mélanger les gaz de combustion issus de la tuyère d'éjection d'un moteur avec de l'air frais provenant du compartiment moteur et/ou de diriger les gaz vers des zones préférentielles. La tuyère d'éjection peut être qualifiée de tuyère primaire ou principale, le conduit d'échappement pouvant être qualifié de tuyère secondaire.

En cas d'échec du démarrage du moteur, du carburant non brûlé peut être éjecté dans la tuyère d'éjection. En fonction de l'attitude en tangage et/ou en roulis de l'aéronef, ce carburant non brûlé peut alors tomber par gravité dans le conduit d'échappement, puis dans le compartiment moteur ou peut être éjecté en dehors de l'aéronef.

Le compartiment moteur peut loger un système de drainage pour évacuer à son tour le carburant non brûlé.

Néanmoins, une partie du carburant non brûlé peut rester bloquée dans le conduit d'échappement et peut s'accumuler au niveau d'un point bas.

Des exigences de certification peuvent autoriser la présence d'un volume de carburant non brûlé dans un conduit d'échappement, à condition que le volume de carburant non brûlé restant dans le conduit d'échappement soit inférieur à un volume imposé. Un tel volume peut être qualifié de « volume indrainable ».

Pour atteindre cet objectif, un conduit d'échappement peut comprendre un point bas débouchant sur un système de drainage. Un tel système de drainage est efficace mais présente de fait une masse non négligeable.

Le document US2022/0154613 A1 décrit un hélicoptère monomoteur ayant une tuyère pourvue d'une section en forme de haricot pour éloigner les gaz d'échappement de la poutre de queue de l'hélicoptère.

Le document EP3381792 B1 décrit un dispositif de drainage aérodynamique muni d'un socle relié à une partie supérieure par une partie intermédiaire.

Le document EP3084187 décrit un dispositif de drainage pour un moteur. Ce dispositif comporte un collecteur, des moyens de pompage des fluides contenus dans le collecteur et des moyens de surveillance configurés pour signaler une collecte anormale des fluides par le collecteur.

Le document CA 2 860 080 A1 est aussi connu. Le document CA 2 860 080 A1 décrit un conduit d'échappement qui recouvre une tuyère d'éjection sur une distance longitudinale, en formant une ouverture périphérique entre la tuyère d'éjection et ce conduit d'échappement.

La présente invention a alors pour objet de proposer un conduit d'échappement innovant visant à minimiser le volume de carburant non brûlé dans le conduit d'échappement.

Un tel conduit d'échappement est configuré pour être disposé autour d'une tuyère d'éjection d'un moteur, le conduit d'échappement présentant une pluralité de sections, lesdites sections comprenant une section d'entrée et une section de sortie, le conduit d'échappement s'étendant le long d'une ligne directrice de la section d'entrée à la section de sortie, la section de sortie étant configurée pour expulser des gaz éjectés par la tuyère d'éjection.

En outre, les sections sont circulaires entre la section d'entrée et la section de sortie, à l'exception des sections d'un tronçon déformé, disposé entre la section d'entrée incluse ou non incluse et la section de sortie incluse ou non incluse, chaque section du tronçon déformé comprenant un secteur inférieur et un secteur supérieur, le secteur inférieur ayant une forme non circulaire pour qu'au moins un volume de liquide ne pouvant atteindre par gravité la section d'entrée et la section de sortie soit inférieur à un seuil de volume en présence d'angles de tangage et de roulis compris respectivement dans des plages angulaires en tangage et en roulis prédéterminées.

Classiquement, un aéronef peut être conçu pour que son assiette en roulis et en tangage soit toujours dans des limites prédéterminées, notamment au sol voire dans certaines conditions. L'expression « plages angulaires en tangage et en roulis prédéterminées » signifie que ces plages sont imposées par le constructeur et représentent donc bien une caractéristique associée au conduit d'échappement.

Comparé à un conduit d'échappement à sections circulaires, le conduit d'échappement comporte un tronçon déformé. Ce tronçon déformé est modifié, voire tronqué, par rapport à un tronçon à sections circulaires pour que chaque volume de liquide qui ne pourrait pas atteindre par gravité la section d'entrée ou la section de sortie, avec des angles de roulis et de tangage courants compris dans lesdites plages angulaires en roulis et en tangage prédéterminées, soit inférieur à un seuil de volume imposé. Le tronçon déformé peut présenter un méplat, une gouttière, une ou des bosses par exemple

Quelle que soit l'attitude en roulis et en tangage de l'aéronef muni d'un conduit d'échappement au sol et dans les limites d'assiette imposées, la géométrie du conduit d'échappement permet de garantir qu'un volume de liquide éventuellement maintenu dans le conduit d'échappement est inférieur au seuil de volume autorisé. Ce seuil de volume autorisé peut être imposé par des exigences de certification, et par exemple par un règlement de certification et/ou un complément d'un règlement de certification.

Ainsi, il n'est pas nécessaire d'agencer un système de drainage spécifique pour drainer ce volume de liquide au sein du conduit d'échappement.

Dans ces conditions, la masse du système peut être optimisée.

En outre, le développement d'un conduit d'échappement est complexe en raison notamment de la température élevée des gaz éjectés de l'ordre de plusieurs centaines de degrés Celsius, des pressions à supporter, ainsi que des contraintes vibratoires.

Modifier un conduit d'échappement est ainsi délicat. Néanmoins, une déviation maximale et locale de un à deux centimètres par rapport à un conduit d'échappement à sections circulaires peut être suffisante pour limiter chaque volume maximal de carburant non brûlé dans le conduit d'échappement à un volume autorisé. L'aérodynamisme du conduit d'échappement peut alors être faiblement impacté, ou dans des marges acceptables.

Selon un autre aspect financier, le conduit d'échappement peut garder un coût raisonnable.

Le conduit d'échappement peut comprendre une ou plusieurs des caractéristiques qui suivent, prises seules ou en combinaison.

Ainsi, le conduit d'échappement peut comporter deux demi-coquilles accolées l'une à l'autre, une des deux demi-coquilles comprenant le secteur inférieur de chaque section et l'autre demi-coquille comprenant le secteur supérieur de chaque section. La demi-coquille comprenant les secteurs supérieurs peut être de forme hémicylindrique. Seule la demi-coquille comprenant les secteurs inférieurs est alors déformée. L'impact du tronquage du conduit d'échappement est alors minimisé.

Alternativement, le conduit d'échappement peut comporter deux demi-coquilles identiques accolées l'une à l'autre, les deux demi-coquilles étant symétriques par rapport à un plan contenant ladite ligne directrice, une des deux demi-coquilles comprenant les secteurs inférieurs desdites sections du tronçon déformé et l'autre demi-coquille comprenant les secteurs supérieurs desdites sections du tronçon déformé.

En présence d'un aéronef bimoteur, les deux demi-coquilles peuvent permettre la réalisation de n'importe lequel des conduits d'échappement. Cette solution permet de limiter les outillages de fabrication.

La demi-coquille inférieure et la demi-coquille supérieure d'un conduit d'échappement peuvent former respectivement la demi-coquille supérieure et la demi-coquille inférieure de l'autre conduit d'échappement.

Selon une possibilité compatible avec les précédentes, au moins la section d'entrée ou la section de sortie peut être circulaire.

Eventuellement, le tronçon déformé est entre la section d'entrée non incluse et la section de sortie non incluse, ou peut comprendre une de ces sections.

Selon une possibilité compatible avec les précédentes, chaque section du tronçon déformé peut présenter une forme non circulaire disposée entre deux arcs de cercle.

La forme non circulaire correspond à la zone modifiée du conduit d'échappement, par rapport à un conduit d'échappement à sections circulaires.

Eventuellement, la forme non circulaire peut être une forme plate.

Dès lors, le conduit d'échappement comporte au moins une partie plane, ce qui permet d'éviter d'avoir une zone formant un réceptacle ne permettant pas d'évacuer du carburant.

Selon un autre aspect, chaque section peut être orthogonale à la ligne directrice

Eventuellement, ladite ligne directrice peut être courbe.

Par ailleurs, un aéronef peut être muni d'au moins un moteur, le moteur comprenant une tuyère d'éjection pour au moins éjecter des gaz, ledit aéronef comprenant un conduit d'échappement selon l'invention disposé au moins partiellement autour de la tuyère d'éjection.

L'invention vise aussi un procédé de conception d'un conduit d'échappement configuré pour être disposé autour d'une tuyère d'éjection d'un moteur, le conduit d'échappement présentant une pluralité de sections, lesdites sections comprenant une section d'entrée et une section de sortie, le conduit d'échappement s'étendant le long d'une ligne directrice de la section d'entrée à la section de sortie, la section de sortie étant configurée pour expulser des gaz éjectés par la tuyère d'éjection.

Le procédé de conception comporte la définition d'un boyau à sections circulaires s'étendant de la section d'entrée à la section de sortie, le procédé de conception comportant au moins une phase de modification comprenant les étapes suivantes :
- détermination d'au moins un volume indrainable délimité par le boyau et dans lequel un liquide ne peut pas atteindre par gravité la section d'entrée et la section de sortie pour des angles de tangage et de roulis compris respectivement dans des plages angulaires en tangage et en roulis prédéterminées,
- si aucun volume indrainable est supérieur ou égal à un seuil de volume, attribution d'une géométrie du boyau au conduit d'échappement,
- si au moins un volume indrainable est supérieur ou égal au seuil de volume : (i) positionnement d'une forme prédéterminée coupant le boyau, ledit au moins un volume indrainable étant présent entre le boyau et la forme prédéterminée, (ii) modification du boyau, la partie du boyau située sous la forme prédéterminée et comprenant ledit au moins un volume indrainable étant coupée et remplacée localement par la forme prédéterminée, (iii) réalisation d'une nouvelle phase de modification avec le boyau obtenu suite à ladite modification du boyau.

Le boyau utilisé à l'initiation du procédé peut avoir la forme d'un conduit d'échappement usuel à sections circulaires.

L'expression « volume indrainable » désigne un volume dans lequel un liquide reste coincé en présence des angles de roulis et de tangage autorisés.

Selon le procédé, un opérateur définit une forme géométrique dénommée « boyau ». Une forme prédéterminée est déplacée par rapport au boyau, afin de positionner le volume indrainable entre cette forme prédéterminée et le boyau. La partie du boyau comprise sous cette forme prédéterminée et comprenant le volume indrainable est alors retirée et remplacée localement par la forme prédéterminée pour former un nouveau boyau. La phase de modification est alors réalisée de manière itérative jusqu'à obtenir un volume indrainable inférieur à un volume imposé par le constructeur et/ou une exigence de certification. Le conduit d'échappement à fabriquer est alors défini de manière à avoir la forme finale du boyau obtenu à l'issue du procédé de conception

Eventuellement, la forme prédéterminée peut être un plan.

Eventuellement, la détermination d'au moins un volume indrainable délimité par le boyau et dans lequel un liquide ne peut pas atteindre par gravité la section d'entrée et la section de sortie pour des angles de tangage et de roulis compris respectivement dans lesdites plages angulaires en tangage et en roulis prédéterminées peut comporter l'étape suivante :
- pour une pluralité d'attitudes du conduit d'échappement autorisées par les plages angulaires en roulis et en tangage prédéterminées, chaque attitude étant associée à un angle de roulis et un angle de tangage, détermination d'un volume intermédiaire dans lequel un liquide ne peut pas atteindre par gravité la section d'entrée et la section de sortie, ledit au moins un volume indrainable étant égal à une somme desdits volumes intermédiaires.

Cette caractéristique permet de prendre en considération de multiples attitudes.

L'invention vise aussi un procédé de fabrication d'un conduit d'échappement configuré pour être disposé autour d'une tuyère d'éjection d'un moteur.

Ce procédé de fabrication comporte une définition d'une géométrie du conduit d'échappement en appliquant le procédé de conception précité, puis une étape de fabrication du conduit d'échappement pour conférer à ce conduit d'échappement ladite géométrie.

L'invention et ses avantages apparaîtront avec plus de détails dans le cadre de la description qui suit avec des exemples donnés à titre illustratif en référence aux figures annexées qui représentent :
la figure 1, une vue en coupe d'un conduit d'échappement au sein d'un aéronef selon l'invention,
la figure 2, un schéma illustrant un conduit d'échappement selon l'invention,
la figure 3, un schéma illustrant un aéronef comprenant deux conduits d'échappement selon l'invention,
la figure 4, un schéma illustrant une étape de détermination d'au moins un volume indrainable durant le procédé de fabrication d'un conduit d'échappement selon l'invention,
la figure 5, un schéma illustrant une étape de positionnement d'une forme prédéterminée coupant le boyau durant le procédé de fabrication d'un conduit d'échappement selon l'invention,
la figure 6, un schéma illustrant une étape de modification du boyau durant le procédé de fabrication d'un conduit d'échappement selon l'invention,
la figure 7, un schéma illustrant une étape de fabrication dudit conduit d'échappement durant le procédé de fabrication d'un conduit d'échappement selon l'invention.

Les éléments présents dans plusieurs figures distinctes sont affectés d'une seule et même référence.

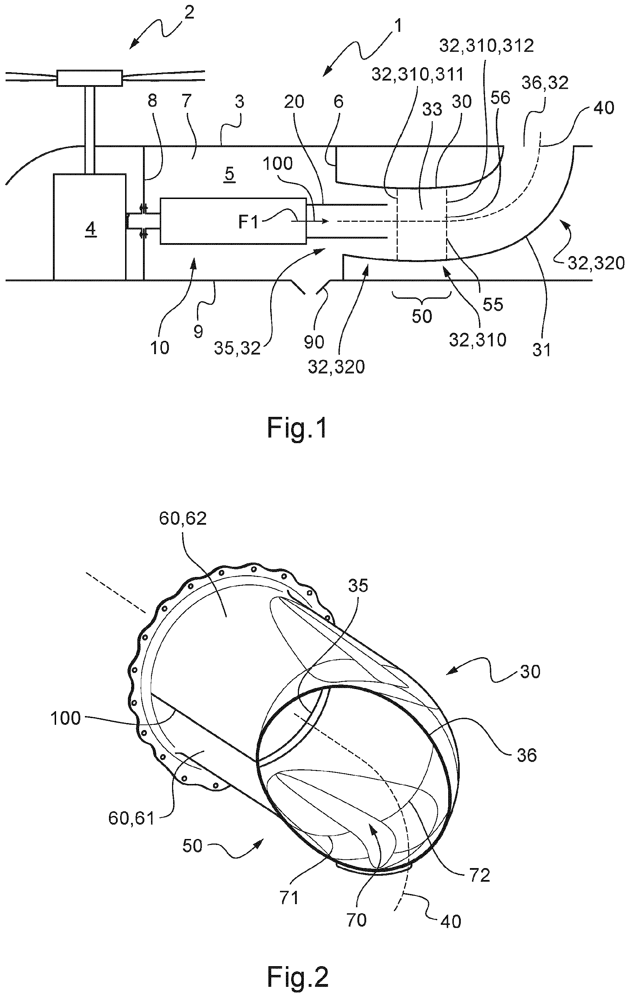

La figure 1 présente un conduit d'échappement 30 selon l'invention. Ce conduit d'échappement 30 peut être agencé sur un véhicule et notamment un aéronef 1. Le conduit d'échappement 30 et l'aéronef 1 sont configurés pour pouvoir atteindre, notamment au sol, un angle de roulis contenu dans une plage angulaire en roulis imposée par le constructeur et un angle de tangage contenu dans une plage angulaire en tangage imposée par le constructeur.

Un tel aéronef 1 comprend une cellule 3 dans laquelle se trouve en outre au moins un moteur 10. Ce moteur 10 est logé au moins partiellement dans un compartiment moteur 5.

Le compartiment moteur 5 est délimité par au moins une paroi 6, 7, 8 et 9. La ou les parois 6, 7, 8 et 9 peuvent être des parois anti-feu, par exemple ignifugées. Par exemple, le compartiment moteur 5 est délimité selon un axe longitudinal par au moins une paroi longitudinale 6, 8. Par exemple, le compartiment moteur 5 est délimité selon un axe transversal par au moins une paroi transversale 7 et un capot, et verticalement au moins par une paroi de fond 9. Selon l'exemple illustré, l'aéronef 1 comporte une paroi de fond 9 et une paroi transversale 7 qui s'étendent entre deux parois longitudinales 6, 8.

Eventuellement, le compartiment moteur 5 peut comprendre un système de drainage usuel. Ce système de drainage peut comprendre au moins un orifice 90 ménagé dans la paroi de fond 9, au moins une tuyauterie, au moins un plan incliné ménagé dans la paroi de fond 9, etc.

Par ailleurs, le ou les moteurs 10 peuvent comporter chacun un arbre de puissance, connecté à une chaîne mécanique de transmission de puissance 4, possiblement en traversant une paroi longitudinale 8. Cette chaîne mécanique de transmission de puissance 4 peut mettre en mouvement au moins un rotor, et par exemple une voilure tournante 2.

Le ou les moteurs 10 peuvent être des moteurs thermiques aptes à brûler un carburant pour mettre en mouvement chaque arbre de puissance. Selon une possibilité, le ou les moteurs 10 peuvent être des turbomoteurs. Alternativement, le ou les moteurs 10 peuvent être des moteurs à pistons par exemple.

Indépendamment de la nature du ou des moteurs 10 et de leur agencement, chaque moteur 10 comporte une tuyère d'éjection 20 pour au moins éjecter des gaz résultant de la combustion du carburant selon la flèche F1. Par exemple, la tuyère d'éjection 20 traverse une paroi longitudinale 6.

Dès lors, un conduit d'échappement 30 selon l'invention entoure la tuyère d'éjection 20, à savoir toute la tuyère d'éjection 20 ou un tronçon de la tuyère d'éjection 20 et par exemple au minimum une zone extrémale de la tuyère d'éjection 20 par laquelle des gaz sont expulsés. Par exemple, le conduit d'échappement 30 entoure au moins une partie de la tuyère d'éjection 20 située en dehors du compartiment moteur 5.

Le conduit d'échappement 30 peut comprendre une paroi périphérique 31. La paroi périphérique 31 délimite un volume interne 33 situé à l'intérieur du conduit d'échappement 30 et accueillant au moins un tronçon de la tuyère d'échappement 20.

Par ailleurs, le conduit d'échappement 30 présente une succession de sections 32 alignées le long d'une ligne directrice 40. Le terme « section » désigne une coupe du conduit d'échappement dans un plan.

Chaque section 32 peut s'étendre orthogonalement à la ligne directrice 40. Par ailleurs, la ligne directrice 40 peut être un segment de droite, ou peut être courbe selon les exemples illustrés.

Dès lors, le conduit d'échappement 30 s'étend le long de la ligne directrice d'une section d'entrée 35, débouchant éventuellement sur le compartiment moteur 5, jusqu'à une section de sortie 36, débouchant éventuellement sur un milieu EXT situé à l'extérieur de l'aéronef 1. Dès lors, de l'air présent dans le compartiment 5 peut être aspiré dans le conduit d'échappement 30, puis est expulsé en dehors du véhicule avec des gaz provenant de la tuyère d'éjection 20 par la section de sortie 36.

Par ailleurs, toutes les sections 32 sont circulaires, à l'exception des sections 310 d'un tronçon déformé 50. Autrement dit, les sections 310 du tronçon déformé 50 ne sont pas circulaires, les sections 320 n'appartenant pas au tronçon déformé 50 étant circulaires.

La référence 32 est affectée à n'importe quelle section, les références 310, 320, 311, 312, 35, 36 désignant des sections particulières si besoin.

Le tronçon déformé 50 s'étend le long de la ligne directrice 40 entre une première section 311 et une deuxième section 312.

Le tronçon déformé 50 est disposé entre la section d'entrée 35 incluse ou non incluse et la section de sortie 36 incluse ou non incluse. Dès lors, la première section 311 peut être la section d'entrée 35 ou une autre section en aval de la section d'entrée 35 selon l'exemple illustré. De même, la deuxième section 312 peut être la section de sortie 36 ou une autre section en amont de la section de sortie 36 selon l'exemple de la figure 1. Autrement dit, la section d'entrée 35 et/ou la section de sortie 36 peuvent être circulaires en fonction de la localisation du tronçon déformé 50.

Chaque section 310 du tronçon déformé 50 s'étend d'un secteur inférieur 55 à un secteur supérieur 56, le secteur supérieur 56 étant situé au dessus du secteur inférieur 55 aux yeux d'un individu lorsque le véhicule repose sur le sol dans une position normale, à savoir non retourné et par exemple sur son train d'atterrissage dans le cadre d'un aéronef 1.

La référence 55 est affectée à n'importe quel secteur inférieur du tronçon déformé 50 et la référence 56 est affectée à n'importe quel secteur supérieur du tronçon déformé 50.

Dès lors, au moins le secteur inférieur 55 de chaque section du tronçon déformé 50 a une forme non circulaire. Cette forme non circulaire a pour fonction de maintenir en dessous d'un seuil de volume au moins un volume de liquide, ce volume de liquide ne pouvant pas atteindre par gravité la section d'entrée 35 et la section de sortie 36 en présence d'angles de tangage et de roulis compris respectivement dans lesdites plages angulaires en tangage et en roulis prédéterminées.

Ainsi quels que soient les angles en roulis et en tangage courants et tant que ces angles en roulis et en tangage courants restent dans les plages angulaires en roulis et en tangage prédéterminées, le conduit d'échappement ne contient aucun volume continu de liquide supérieur ou égal au seuil de volume. Par exemple, le conduit d'échappement 30 peut comprendre un ou plusieurs volumes de liquide distincts, chacun de ces volumes de liquide étant inférieur au seuil de volume.

En référence à la figure 2, chaque section du tronçon déformé 50 peut ainsi présenter une forme non circulaire 70, éventuellement disposée entre deux arcs de cercle 71, 72. Cette forme non circulaire est notamment présente dans les secteurs inférieurs 55 des sections 310 du tronçon déformé 50.

En particulier, la forme non circulaire 70 peut être une forme plate, à savoir droite.

Dès lors, le conduit d'échappement 30 a globalement une forme cylindrique, aplatie localement au moins en partie basse pour éviter de présenter une zone basse ne pouvant pas être drainée et susceptible de loger un volume de liquide supérieur ou égal à un seuil de volume imposé.

Selon une autre caractéristique, le conduit d'échappement 30 peut être fabriqué à l'aide de deux demi-coquilles 60, 61, 62 accolées l'une à l'autre. Une des deux demi-coquilles 61 comprend les secteurs inférieurs 55 des sections 310 du tronçon déformé 50 et l'autre demi-coquille 62 comprend les secteurs supérieurs 56 des sections 310 du tronçon déformé 50.

Eventuellement, les deux demi-coquilles 61, 62 sont identiques. Une fois accolées pour former le conduit d'échappement 30, les demi-coquilles 61, 62 sont symétriques par rapport à un plan 100 contenant la ligne directrice 40.

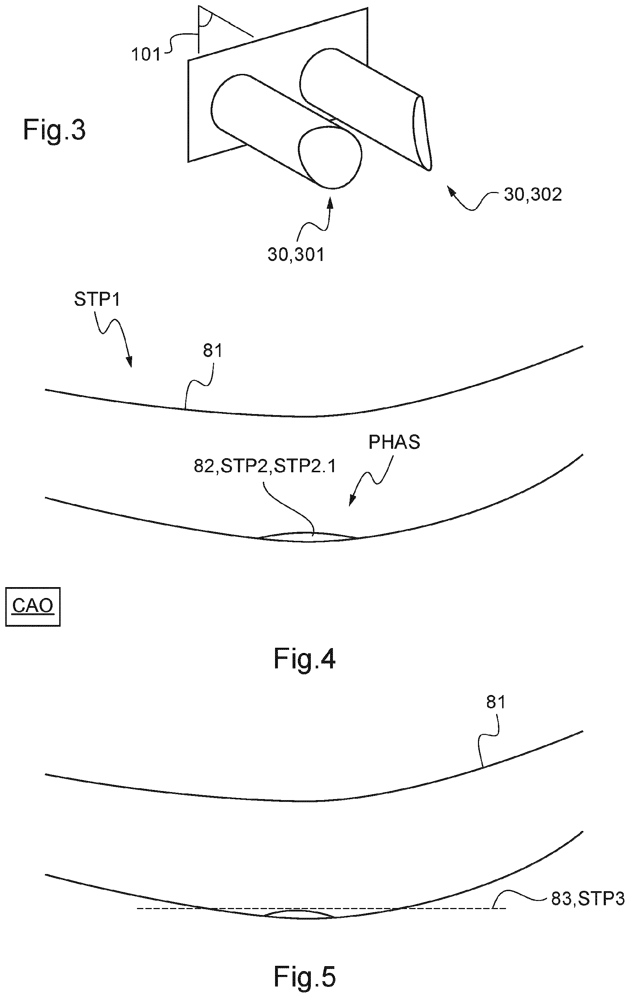

En référence à la figure 3, un véhicule 1 peut comprendre deux moteurs 10 et deux conduits d'échappement 301, 302 respectifs. Les deux conduits d'échappement 301, 302 peuvent alors être identiques, et par exemple agencés symétriquement par rapport à un plan vertical 101.

Les figures 4 à 6 illustrent un procédé de conception et de fabrication d'un conduit d'échappement 30 selon l'invention.

En référence à la figure 4, le procédé comporte la définition STP1 d'un boyau 81 à sections circulaires s'étendant de la section d'entrée 35 à la section de sortie 36, par exemple avec un système de conception assisté par ordinateur CAO.

De plus, le procédé comporte au moins une phase de modification PHAS. Chaque phase de modification PHAS comporte une détermination STP2 d'un ou de plusieurs volumes indrainables 82 délimités dans le boyau 81 et dans lesquels un liquide ne peut pas atteindre par gravité la section d'entrée 35 et la section de sortie 36 pour des angles de tangage et de roulis compris respectivement dans lesdites plages angulaires en tangage et en roulis prédéterminées.

Par exemple, pour une pluralité d'attitudes du conduit d'échappement 30, chaque attitude correspondant à un inclinaison du conduit d'échappement 30 selon un angle de roulis et un angle de tangage autorisées par les plages angulaires en roulis et en tangage prédéterminées, la phase de modification PHAS comporte une détermination STP2.1 d'au moins un volume intermédiaire dans lequel un liquide ne peut pas atteindre par gravité la section d'entrée 35 et la section de sortie 36, par exemple avec le système de conception assisté par ordinateur CAO. Chaque volume indrainable est alors égal à une somme des volumes intermédiaires correspondants.

Si aucun volume indrainable 82 n'est supérieur ou égal à un seuil de volume, le procédé comporte la fixation de la définition. En particulier, le procédé de conception comporte l'attribution STP5 de la géométrie finale du boyau, à savoir sa forme, au conduit d'échappement 30.

En référence à la figure 5, si au moins un volume indrainable est supérieur ou égal au seuil de volume, la phase de modification PHAS comporte un positionnement STP3 d'une forme prédéterminée 83 qui coupe le boyau 81, par exemple avec le système de conception assisté par ordinateur.

Par exemple, la forme prédéterminée 83 peut être un plan.

La forme prédéterminée 83 est positionnée afin que chaque volume indrainable soit présent entre le boyau 81 et cette forme prédéterminée 83. La forme prédéterminée 83 peut être tangente à au moins un volume indrainable. La forme prédéterminée peut s'étendre horizontalement dans le référentiel de l'aéronef.

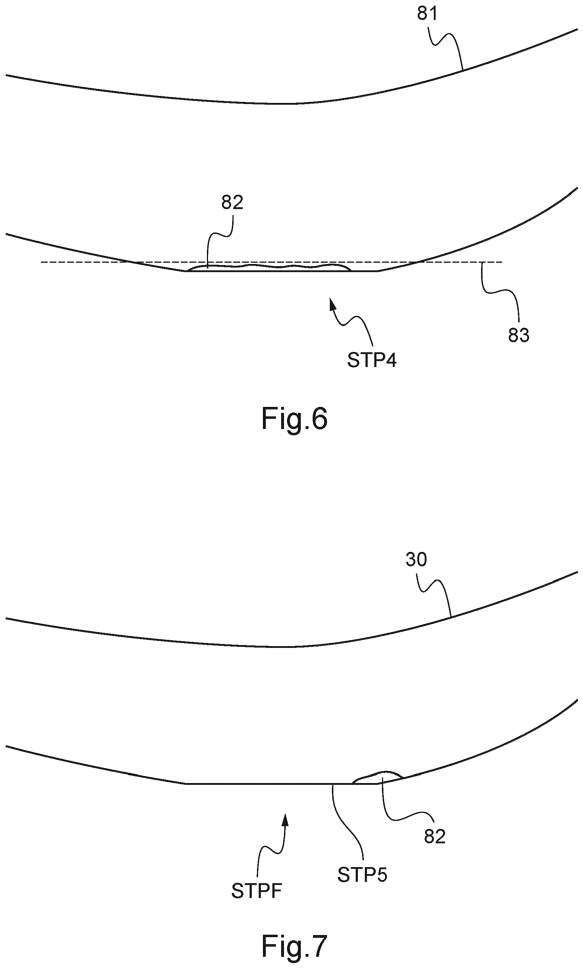

En référence à la figure 6, la phase de modification PHAS comporte ensuite une modification STP4 du boyau 81. Le boyau 81 est déformé afin que la partie du boyau 81 située sous la forme prédéterminée 83 et comprenant le ou les volumes indrainables soit coupée et remplacée localement par la forme prédéterminée 83. Selon l'exemple illustré, un fond plat remplace alors toute la zone tronquée du boyau 81.

Dès lors, le procédé de conception comporte la réalisation d'une nouvelle phase de modification PHAS avec le boyau modifié, et ainsi de suite jusqu'à ce que chaque volume indrainable soit inférieur au seuil de volume imposé.

En référence à la figure 7, le procédé de conception comporte à l'issue de la ou des phases de modification PHAS, l'attribution STP5 de la géométrie finale du boyau au futur conduit d'échappement 30.

Par suite, le conduit d'échappement 30 est fabriqué. Par exemple, la fabrication STPF du conduit d'échappement 30 sur la base du boyau modifié comporte la fabrication de deux demi-coquilles, et l'emboutissage d'au moins une des demi-coquilles.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Conduit d'échappement (30) configuré pour être disposé autour d'une tuyère d'éjection (20) d'un moteur (10), le conduit d'échappement (30) présentant une pluralité de sections (32), lesdites sections comprenant une section d'entrée (35) et une section de sortie (36), le conduit d'échappement (30) s'étendant le long d'une ligne directrice (40) de la section d'entrée (35) à la section de sortie (36), la section de sortie (36) étant configurée pour expulser des gaz éjectés par la tuyère d'éjection (20),
**caractérisé en ce que** lesdites sections sont circulaires entre la section d'entrée (35) et la section de sortie (36), à l'exception des sections (310) d'un tronçon déformé (50), chaque section du tronçon déformé (50) comprenant un secteur inférieur (55) et un secteur supérieur (56), le secteur inférieur (55) ayant une forme non circulaire pour qu'au moins un volume de liquide ne pouvant atteindre par gravité la section d'entrée (35) et la section de sortie (36) soit inférieur à un seuil de volume en présence d'angles de tangage et de roulis compris respectivement dans des plages angulaires en tangage et en roulis prédéterminées.

2. Conduit d'échappement selon la revendication 1,
**caractérisé en ce que** le conduit d'échappement (30) comporte deux demi-coquilles (61, 62) identiques accolées l'une à l'autre, les deux demi-coquilles (61, 62) étant symétriques par rapport à un plan (100) contenant ladite ligne directrice (40), une des deux demi-coquilles (61) comprenant les secteurs inférieurs desdites sections du tronçon déformé (50) et l'autre demi-coquille (62) comprenant les secteurs supérieurs desdites sections du tronçon déformé (50).

3. Conduit d'échappement selon l'une quelconque des revendications 1 à 2,
**caractérisé en ce qu'**au moins la section d'entrée (35) ou la section de sortie (36) est circulaire.

4. Conduit d'échappement selon l'une quelconque des revendications 1 à 3,
**caractérisé en ce que** chaque section du tronçon déformé (50) présente une forme non circulaire (70) disposée entre deux arcs de cercle (71, 72).

5. Conduit d'échappement selon la revendication 4,
**caractérisé en ce que** la forme non circulaire (70) est une forme plate.

6. Conduit d'échappement selon l'une quelconque des revendications 1 à 5,
**caractérisé en ce que** chaque section est orthogonale à la ligne directrice (40).

7. Conduit d'échappement selon l'une quelconque des revendications 1 à 6,
**caractérisé en ce que** ladite ligne directrice (40) est courbe.

8. Aéronef (1) muni d'au moins un moteur (10), le moteur (10) comprenant une tuyère d'éjection (20) pour au moins éjecter des gaz, ledit aéronef (1) comprenant un conduit d'échappement (30) disposé au moins partiellement autour de la tuyère d'éjection (20),
**caractérisé en ce que** le conduit d'échappement (30) est selon l'une quelconque des revendications 1 à 7.

9. Procédé de conception d'un conduit d'échappement (30) configuré pour être disposé autour d'une tuyère d'éjection (20) d'un moteur (10), le conduit d'échappement (30) présentant une pluralité de sections, lesdites sections comprenant une section d'entrée (35) et une section de sortie (36), le conduit d'échappement (30) s'étendant le long d'une ligne directrice (40) de la section d'entrée (35) à la section de sortie (36), la section de sortie (36) étant configurée pour expulser des gaz éjectés par la tuyère d'éjection (20),
**caractérisé en ce que** le procédé de conception comporte la définition (STP1) d'un boyau (81) à sections circulaires s'étendant de la section d'entrée à la section de sortie, le procédé de conception comportant au moins une phase de modification (PHAS) comprenant les étapes suivantes :
- détermination (STP2) d'au moins un volume indrainable (82) délimité par le boyau (81) et dans lequel un liquide ne peut pas atteindre par gravité la section d'entrée (35) et la section de sortie (36) pour des angles de tangage et de roulis compris respectivement dans des plages angulaires en tangage et en roulis prédéterminées,
- si aucun volume indrainable est supérieur ou égal à un seuil de volume, attribution (STP5) d'une géométrie du boyau (81) au conduit d'échappement (30) ,
- si au moins un volume indrainable est supérieur ou égal au seuil de volume : (i) positionnement (STP3) d'une forme prédéterminée (83) coupant le boyau (81), ledit au moins un volume indrainable étant présent entre le boyau (81) et la forme prédéterminée (83), (ii) modification (STP4) du boyau (81), la partie du boyau (81) située sous la forme prédéterminée (83) et comprenant ledit au moins un volume indrainable étant coupée et remplacée localement par la forme prédéterminée (83), (iii) réalisation d'une nouvelle phase de modification (PHAS) avec le boyau obtenu suite à ladite modification (STP4) du boyau (81).

10. Procédé selon la revendication 9,
**caractérisé en ce que** la forme prédéterminée est un plan.

11. Procédé selon l'une quelconque des revendications 9 à 10, **caractérisé en ce que** ladite détermination (STP2) d'au moins un volume indrainable délimité par le boyau (81) et dans lequel un liquide ne peut pas atteindre par gravité la section d'entrée (35) et la section de sortie (36) pour des angles de tangage et de roulis compris respectivement dans lesdites plages angulaires en tangage et en roulis prédéterminées comporte :
- pour une pluralité d'attitudes du conduit d'échappement (30) autorisées par les plages angulaires en roulis et en tangage prédéterminées, détermination (STP2.1) d'un volume intermédiaire dans lequel un liquide ne peut pas atteindre par gravité la section d'entrée (35) et la section de sortie (36), ledit au moins un volume indrainable étant égal à une somme desdits volumes intermédiaires.

12. Procédé de fabrication d'un conduit d'échappement (30) configuré pour être disposé autour d'une tuyère d'éjection (20) d'un moteur (10),
**caractérisé en ce que** le procédé de fabrication comporte une définition d'une géométrie du conduit d'échappement (30) en appliquant le procédé de conception selon l'une quelconque des revendications 9 à 11, puis une étape de fabrication du conduit d'échappement pour conférer à ce conduit d'échappement ladite géométrie.

## Patentansprüche

1. Abgaskanal (30), der konfiguriert ist, um um eine Auslassdüse (20) eines Triebwerks (10) herum angeordnet zu werden, wobei der Abgaskanal (30) eine Mehrzahl von Querschnitten (32) aufweist, wobei die Querschnitte einen Eingangsquerschnitt (35) und einen Ausgangsquerschnitt (36) umfassen, wobei sich der Abgaskanal (30) entlang einer Leitlinie (40) von dem Eingangsquerschnitt (35) zu dem Ausgangsquerschnitt (36) erstreckt, wobei der Ausgangsquerschnitt (36) konfiguriert ist, um von der Auslassdüse (20) ausgestoßene Gase auszustoßen,
**dadurch gekennzeichnet, dass** die Querschnitte zwischen dem Eingangsquerschnitt (35) und dem Ausgangsquerschnitt (36) kreisförmig sind, mit Ausnahme der Querschnitte (310) eines verformten Stücks (50), wobei jeder Abschnitt des verformten Stücks (50) einen unteren Sektor (55) und einen oberen Sektor (56) umfasst, wobei der untere Sektor (55) eine nicht kreisförmige Form aufweist, so dass mindestens ein Volumen von Flüssigkeit, die bei Nick- und Rollwinkeln, die jeweils in vorgegebenen Nick- und Rollwinkelbereichen liegen, nicht durch Schwerkraft den Eingangsquerschnitt (35) und den Ausgangsquerschnitt (36) erreichen kann, unterhalb eines Volumenschwellenwerts liegt.

2. Abgaskanal nach Anspruch 1,
**dadurch gekennzeichnet, dass** der Abgaskanal (30) zwei identische Halbschalen (61, 62) aufweist, die aneinandergefügt sind, wobei die beiden Halbschalen (61, 62) in Bezug auf eine Ebene (100), die die Leitlinie (40) enthält, symmetrisch sind, wobei eine der beiden Halbschalen (61) die unteren Sektoren der Querschnitte des verformten Stücks (50) umfasst und die andere Halbschale (62) die oberen Sektoren der Querschnitte des verformten Stücks (50) umfasst.

3. Abgaskanal nach einem der Ansprüche 1 bis 2,
**dadurch gekennzeichnet, dass** zumindest der Eingangsquerschnitt (35) oder der Ausgangsquerschnitt (36) kreisförmig ist.

4. Abgaskanal nach einem der Ansprüche 1 bis 3,
**dadurch gekennzeichnet, dass** jeder Querschnitt des verformten Stücks (50) eine zwischen zwei Kreisbögen (71, 72) angeordnete nicht kreisförmige Form (70) aufweist.

5. Abgaskanal nach Anspruch 4,
**dadurch gekennzeichnet, dass** die nicht kreisförmige Form (70) eine flache Form ist.

6. Abgaskanal nach einem der Ansprüche 1 bis 5,
**dadurch gekennzeichnet, dass** jeder Querschnitt orthogonal zur Leitlinie (40) ist.

7. Abgaskanal nach einem der Ansprüche 1 bis 6,
**dadurch gekennzeichnet, dass** die Leitlinie (40) gekrümmt ist.

8. Luftfahrzeug (1) mit mindestens einem Triebwerk (10), wobei das Triebwerk (10) eine Auslassdüse (20) mindestens zum Ausstoßen von Gasen umfasst, wobei das Luftfahrzeug (1) einen Abgaskanal (30) umfasst, der mindestens teilweise um die Auslassdüse (20) herum angeordnet ist,
**dadurch gekennzeichnet, dass** der Abgaskanal (30) gemäß einem der Ansprüche 1 bis 7 ist.

9. Verfahren zum Entwerfen eines Abgaskanals (30), der konfiguriert ist, um um eine Auslassdüse (20) eines Triebwerks (10) herum angeordnet zu werden, wobei der Abgaskanal (30) eine Mehrzahl von Querschnitten aufweist, wobei die Querschnitte einen Eingangsquerschnitt (35) und einen Ausgangsquerschnitt (36) umfassen, wobei sich die Abgasleitung (30) entlang einer Leitlinie (40) von dem Eingangsquerschnitt (35) zu dem Ausgangsquerschnitt (36) erstreckt, wobei der Ausgangsquerschnitt (36) konfiguriert ist, um von der Auslassdüse (20) ausgestoßene Gase auszustoßen,
**dadurch gekennzeichnet, dass** das Entwurfsverfahren das Bestimmen (STP1) eines Schlauchs (81) mit kreisförmigen Querschnitten umfasst, der sich von dem Einlassquerschnitt zu dem Auslassquerschnitt erstrecken, wobei das Entwurfsverfahren mindestens eine Änderungsphase (PHAS) umfasst, die die folgenden Schritte umfasst:
- Bestimmen (STP2) mindestens eines von dem Schlauch begrenzten nicht entwässerbaren Volumens (82), in dem eine Flüssigkeit bei Nick- und Rollwinkeln, die jeweils innerhalb vorgegebener Nick- und Rollwinkelbereiche liegen, nicht durch Schwerkraft den Einlassquerschnitt (35) und den Auslassquerschnitt (36) erreichen kann;
- wenn kein nicht entwässerbares Volumen größer oder gleich einem Volumenschwellenwert ist, Zuweisen (STP5) einer Geometrie des Schlauchs (81) zu dem Auslasskanal (30);
- wenn mindestens ein nicht entwässerbares Volumen größer oder gleich dem Volumenschwellenwert ist : (i) Positionieren (STP3) einer vorgegebenen Form (83), die den Schlauch (81) schneidet, wobei das mindestens eine nicht entwässerbare Volumen zwischen dem Schlauch (81) und der vorgegebenen Form (83) liegt, (ii) Modifizieren (STP4) des Schlauchs (81), wobei der Teil des Schlauchs (81), der unter der vorgegebenen Form (83) liegt und das mindestens eine nicht entwässerbare Volumen enthält, abgeschnitten und lokal durch die vorgegebene Form (83) ersetzt wird, (iii) Ausführen einer neuen Änderungsphase (PHAS) mit dem nach der Änderung (STP4) des Schlauchs (81) erhaltenen Schlauch.

10. Verfahren nach Anspruch 9,
**dadurch gekennzeichnet, dass** die vorgegebene Form eine Ebene ist.

11. Verfahren nach einem der Ansprüche 9 bis 10,
**dadurch gekennzeichnet, dass** das Bestimmen (STP2) mindestens eines von dem Schlauch (81) begrenzten nicht entwässerbaren Volumens, in dem eine Flüssigkeit für Nick- und Rollwinkel, die jeweils in den vorgegebenen Nick- und Rollwinkelbereichen liegen, nicht durch Schwerkraft den Eingangsquerschnitt (35) und den Ausgangsquerschnitt (36) erreichen kann, umfasst :
- für eine Mehrzahl von Haltungen des Abgaskanals (30), die durch die vorgegebenen Roll- und Nickwinkelbereiche zugelassen sind, Bestimmen (STP2.1) eines Zwischenvolumens, in dem eine Flüssigkeit durch Schwerkraft den Eingangsquerschnitt (35) und den Auslassabschnitt (36) nicht erreichen kann, wobei das mindestens eine nicht entwässerbare Volumen gleich einer Summe der Zwischenvolumina ist.

12. Verfahren zum Herstellen eines Abgaskanals (30), der konfiguriert ist, um um eine Ausstoßdüse (20) eines Triebwerks (10) herum angeordnet zu werden,
**dadurch gekennzeichnet, dass** das Herstellungsverfahren ein Definieren einer Geometrie des Abgaskanals (30) durch Anwenden des Entwurfsverfahrens nach einem der Ansprüche 9 bis 11 und dann einen Schritt des Herstellens des Abgaskanals umfasst, um diesem Abgaskanal diese Geometrie zu verleihen.

## Claims

1. Exhaust duct (30) configured to be disposed around an ejection nozzle (20) of an engine (10), the exhaust duct (30) featuring a plurality of sections (32), said sections comprising an inlet section (35) and an outlet section (36), the exhaust duct (30) extending along a guiding line (40) from the inlet section (35) to the outlet section (36), the outlet section (36) being configured to expel gases ejected by the ejection nozzle (20),
**characterised in that** said sections are circular between the inlet section (35) and the outlet section (36), with the exception of the sections (310) of a deformed length (50), each section of the deformed length (50) comprising a lower section (55) and an upper section (56), the lower section (55) having a non-circular shape so that at least one volume of liquid unable by gravity to reach the inlet section (35) and the outlet section (36) is less than a volume threshold in the presence of pitch and roll angles contained respectively within the predetermined angular ranges in pitch and in roll.

2. Exhaust duct according to claim 1,
**characterised in that** the exhaust duct (30) includes two identical half shells (61, 62) coupled together, the two half shells (61, 62) being symmetrical with respect to a plane (100) containing said guiding line (40), one of the two half shells (61) comprising the lower sections of said sections of the deformed length (50) and the other half shell (62) comprising the upper sections of said sections of the deformed length (50).

3. Exhaust duct according to either one of claims 1 or 2,
**characterised in that** at least the inlet section (35) or the outlet section (36) is circular.

4. Exhaust duct according to any one of claims 1 to 3,
**characterised in that** each section of the deformed length (50) features a non-circular shape (70) disposed between two arcs of a circle (71, 72).

5. Exhaust duct according to claim 4,
**characterised in that** the non-circular shape (70) is flat in shape.

6. Exhaust duct according to any one of claims 1 to 5,
**characterised in that** each section is orthogonal to the guiding line (40).

7. Exhaust duct according to any one of claims 1 to 6,
**characterised in that** said guiding line (40) is curved.

8. Aircraft (1) equipped with at least one engine (10), the engine (10) comprising an ejection nozzle (20) for at least ejecting gases, said aircraft (1) comprising an exhaust duct (30) disposed at least partially around the ejection nozzle (20),
**characterised in that** the exhaust duct (30) is according to any one of claims 1 to 7.

9. Method for designing an exhaust duct (30) configured to be disposed around an ejection nozzle (20) of an engine (10), the exhaust duct (30) featuring a plurality of sections, said sections comprising an inlet section (35) and an outlet section (36), the exhaust duct (30) extending along a guiding line (40) from the inlet section (35) to the outlet section (36), the outlet section (36) being configured to expel gases ejected by the ejection nozzle (20),
**characterised in that** the design method includes (STP1), defining a flexible pipe (81) with circular sections extending from the inlet section to the outlet section, the design method including at least one modification phase (PHAS) comprising the following steps:
- (STP2) determining at least one non-drainable volume (82) delimited by the flexible pipe (81) and in which a liquid cannot by gravity reach the inlet section (35) and the outlet section (36) with pitch and yaw angles contained respectively within the predetermined angular ranges in pitch and in roll,
- if no non-drainable volume is greater than or equal to a volume threshold, (STP5) assigning a flexible pipe (81) geometry to the exhaust duct (30),
- if at least one non-drainable volume is greater than or equal to the volume threshold: (i) (STP3) positioning a predetermined shape (83) intersecting the flexible pipe (81), said at least one non-drainable volume being present between the flexible pipe (81) and the predetermined shape (83), (ii) (STP4) modifying the flexible pipe (81), the part of the flexible pipe (81) situated under the predetermined shape (83) and comprising said at least one non-drainable volume being locally intersected and replaced by the predetermined shape (83), (iii) performing a new modification phase (PHAS) with the flexible pipe obtained further to said modification (STP4) of the flexible pipe (81).

10. Method according to claim 9,
**characterised in that** the predetermined shape is a plane.

11. Method according to either one of claims 9 or 10,
**characterised in that** said determination (STP2) of at least one non-drainable volume delimited by the flexible pipe (81) and in which a liquid cannot by gravity reach the inlet section (35) and the outlet section (36) with pitch and roll angles contained respectively within said predetermined angular ranges in pitch and in roll includes:
- for a plurality of attitudes of the exhaust duct (30) authorised by the predetermined angular ranges in pitch and roll, (STP2.1) determining an intermediate volume in which a liquid cannot by gravity reach the inlet section (35) and the outlet section (36), said at least one non-drainable volume being equal to a sum of said intermediate volumes.

12. Method for manufacturing an exhaust duct (30) configured to be disposed around an ejection nozzle (20) of an engine (10),
**characterised in that** the manufacturing method includes defining a geometry of the exhaust duct (30) by applying the design method according to any one of claims 9 to 11, then a stage of manufacturing the exhaust duct in order to confer said geometry to this exhaust duct.
